# EUROPEAN PATENT APPLICATION

(11) **EP 1 150 204 A1**
(43) Date of publication of application: **31.10.2001**
(21) Application number: 00201526.1
(22) Date of filing: 28.04.2000
(51) Int. Cl.: G06F 9/44

(54) **An information processing method and system**

(71) Applicant: Mannesmann VDO Aktiengesellschaft, 60388 Frankfurt am Main (DE)
(72) Inventor: Rühl, Hans-Wilhelm, 35606 Solms (DE)
(74) Representative: Klein, Thomas, Dipl.-Ing.

(57) **Abstract**

A method and apparatus for operating an information processing system practice the dynamical presenting of Help Items to a user person. In particular, the system staticizes occurrences of various user-iniated enterings into the system, that each associate to one of said Help Items. Under control of predetermined system conditions and then-current results of said staticizing outputting selected tips as pertaining to little-used categories amongst various categories of said enterings and executing said outputting in speech.

## Description

The present invention relates to a method for operating an information processing system whilst dynamically presenting help items to a user person who uses the system, for presenting to a user person by an information processing system selected Help Functions in spoken or graphical form. Generally, such Help Functions are directed to instructing a user person about how to arrange or improve the use to be made of a particular information processing tool in an actual information processing context, in particular, being applicable to user interface-directed shortcuts. Certain programs, in particular in Windows environments such as Word, Excel, and Powerpoint, will solve the problem of selecting a function for presentation by upon the calling of a particular program presenting a specific graphics box with information therein that will inform a user person on an intelligent or compact usage of a particular data processing tool or function, or "tip" as called hereinafter, within the context of the actual program. For successive calls to the program in question that may be quite frequent, the sequence of presenting the tips is however generally fixed, so that the user may often "see" tips that are either felt as irrelevant, or tips that will be already known to that particular user. Such will evidently cause a waste of user time.

Now sometimes, the above procedure may be allowable in the context of a graphics-oriented user interface, because of the essentially parallel presentation in such systems, so that the presentation will be generally instantaneous, and therefore, may be cut off quasi-instantaneously. Such cutting-off will however be much more tedious in speech-oriented systems, because the user will only recognize a superfluous information after all or most of the tip will have been presented already, which recognizing may take an appreciable amount of time, such as several seconds. This recognizing will furthermore be distracting to the user, and under certain circumstances, outright dangerous.

In consequence, amongst other things, it is an object of the present invention to select preferentially only those tips for presentation that offer a relatively high probability for being useful to an operator. The invention considers as a measure to maintain during usage of the system a statistics about actual presenting of various tips as represented by user-enterings respectively associated thereto and to selectively present selectively those tips to a user person that have a relatively low usage frequency, and furthermore to do so either dependent or independent of an actual system state. In fact, a particular state may block the presenting of some or all of the tips. In this manner, the system may know which types of enterings have never or almost never been used by the operator, and in consequence, may actually be little known to that user person. It would be evident to the system that certain types of enterings that would present shortcuts in certain system states would greatly speed up the operation of the system or even extend the possibilities thereof. According to the invention, it will become feasible to inform the user only about those categories of enterings or variants thereof that have been used never or almost never. In a graphics-oriented system or situation, the presenting may be effected as before under control of the calling of the particular program in question. In a speech-oriented system the information would be advantageously presented upon a user's calling thereof. In the organization according to the invention, the probability is raised that only such information is presented to a user that has a high probability to be really relevant.

Now therefore, according to one of its aspects the invention is characterized by staticizing occurrences of various user-initiated enterings into the system that each are associated to a respective one of such Help Items, and subsequently, under control of predetermined system conditions and then-current results of said staticizing, outputting selected tips as pertaining to little-used one amongst various categories of said enterings.

The invention also relates to a system being arranged for implementing a method as recited supra. Further advantageous aspects of the invention are recited in dependent Claims.

These and further aspects and advantages of the invention will be discussed more in detail hereinafter with reference to the disclosure of preferred embodiments, and in particular with reference to the appended Figures that show:
Figure 1, a general diagram of a system for implementing the method of the invention;
Figure 2, a flow diagram for a method according to the invention;
Figure 3, an exemplary content of a control store for deciding the actual presentation.

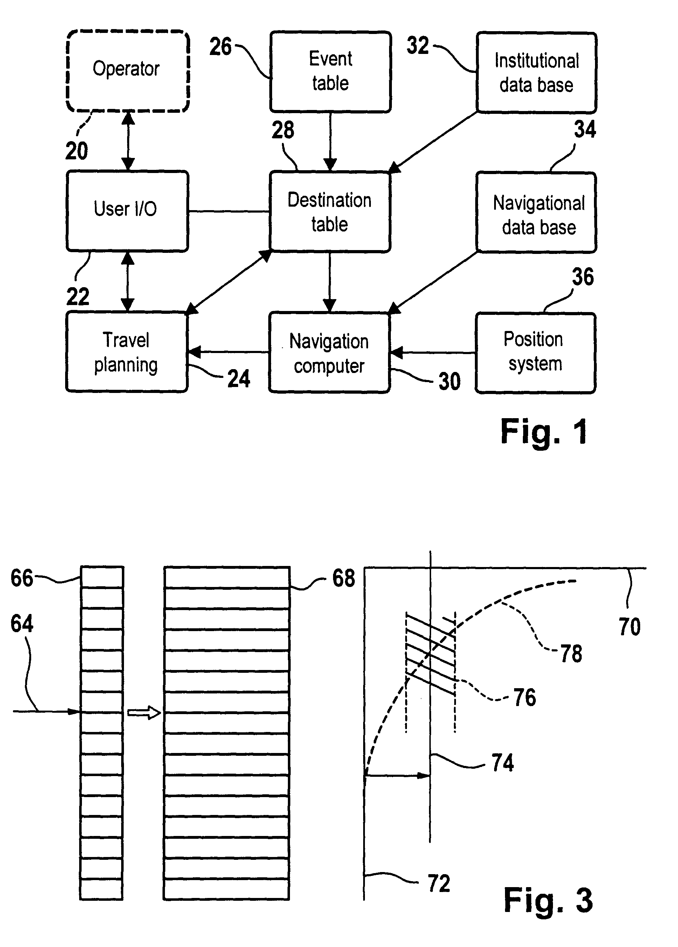

Figure 1 shows a general diagram of a system embodiment for implementing the method of the invention, in particular, a car navigation system. Other types of car information systems are feasible as well. The system by way of example has nine subsystems, as follows. Block 20 symbolizes a user person who wants to be guided by the system. The user interfaces bidirectionally to the system's I/O that may have various hardware and software facilities such as keyboard, mouse, speech, other audio, and display. Block 32 represents an institutional data base that may store various entries, such as representing hotels, restaurants or other facilities, together with associated data such as location, business hours, and actual services present at those facilities. Block 34 represents a navigational data base that may comprise a road network, together with physical distances or travel time distances between representative points, road classification, and others. Block 36 represents a position system that detects an actual position of the vehicle, such as through using a well known GPS system. Block 26 represents an event table, such as storing a road block or jam situation that has been communicated by a higher level authority such as as a **R**adio **D**ata **S**ystem, and which event may cause certain destinations to be no longer reacheable, or only in a delayed manner, or which may necessitate the vehicle to take a detour.

Block 28 represents a destination table that contains the destinations and associated timing indications, such as entered by the user through block 22, and subject to information from the travel planning in block 24, the institutional data base in block 32, and the event table in block 26. Block 30 represents a navigational computer that is fed with the Destination Table from block 28, with the navigational data base from block 34, and with the position from block 36; from these informations it can figure out a route to be taken, which route may contain various interval points and furthermore, timing indications associated to the various interval points. Block 24 represents the travel planning that is fed by the information from the navigational computer 30, and which block 24 furthermore bidirectionally interfaces to the destination table in Block 28, and to the user I/O in Block 22. The travel planning will update the destination table if it fails to find a correct solution for attaining all interval points, and it will signal the user what route is to be taken, as well as will signal the above failure to allow the user to modify the set of Interval Points and/or associated timing indications.

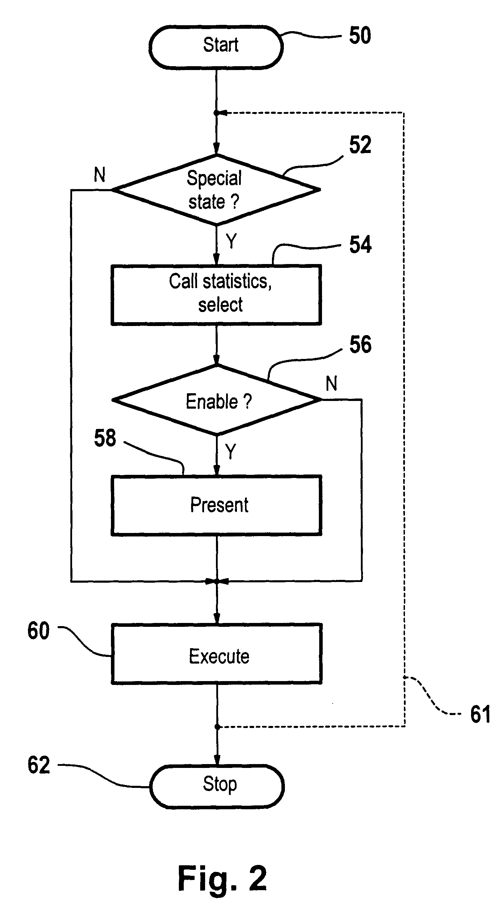

Figure 2 represents a flow diagram for a method according to the invention. In block 50 the necessary hardware and software facilities are assigned. In block 52, the system detects whether the system is in a particular state. Such state may be entailed by the calling of the program or program module in question. In a car navigation system, such state may be effected also by the vehicle standing still, so that the presenting of Help Information to the user would not bring about a substantial traffic safety risk. Various other types of particular states would be associated with various fields of application of the present invention. If no special state, the system proceeds to block 60. If however, the actual state is a special state, the system proceeds to block 54 wherein the statistics are called that have been updated about the user's or the individual user's enterings with respect to selected enterings that represent respective selected shortcuts or data processing tools. Moreover, a particular one is selected for envisaged presentation. In block 56, the system checks for a past enabling by the user person, which may in particular be advantageous for a system that would output its tips, or a particular subset of tips, in speech. The enabling may be made for a certain time interval, such as on a day-by-day basis, according to an arbitrary signal entered by the user, or on a more or less permanent basis. If effectively enabled, in block 58 the selected tip is presented indeed, in speech, in an iconized manner, or otherwise. In block 60, the program is effectively executed on the machine. This may lead to various outcomes. First, the program continues quasi-indefinitely. Second, the program may attain a situation, where it is ready with its work; it may then proceed to block 62 and again relinquish the above-called hardware and software facilities. Third, for some reason once more a request may occur for checking the special state in block 52, as indicated by interrupted line 61.

Figure 3 illustrates an exemplary content of a control store for deciding on the actual presentation. In block 68 for each of the tips a respective tally is maintained that indicates how often an entering corresponding to each of the various tips has been effectively been used by the user person. As shown, each of the sixteen fields pertains to one tip. In this respect, curve 78 has been drawn with respect to horizontal axis 70 that indicates the number of times , or the number of times in a particular time interval that the associated function, tool or shortcut has effectively been used. The vertical axis 72 along the block 68 indicates the tool or shortcut in question. As shown, the functions have been arranged according to frequency of usage, wherein the top functions have been used most, with respect to the bottom functions that have been used only rarely. Now, line 74 indicates a discrimination threshold. According to one embodiment, the tip whereof the frequency of use coincides with this line will be presented next to the user. This means that the function in question has been used a few times, so that it appears a useful one. On the other hand, its use was only rare, so that the operator might be instructed **better** on the function in question. Alternatively, a range of functions as indicated by interval 76 is selected for presentation therefrom according a specific algorithm. The interval 76 may be amended in various manners. The lower edge of the interval could coincide with axis 72, so that only functions that had been used less than a certain number of times will be presented to the user. The threshold could be a fixed value, such as 1 or 10. If various functions all conform to the requirements for presentation may, the selecting thereamongst may be done on the basis of statistics, according to a fixed sequence based on the identity of the function, or according to the actual rating in the order shown in Figure 3. Other stratagems are within the scope of the present invention.

Regarding the physical arrangement, block 66 is the addressing mechanism for updating the statistics in block 68. Each time one of the enterings is effectively used, as according to an identifying message on line 64, the associated tally is incremented. In a starting phase, no valid staticizing will be present yet. Then, a preliminary curve could determine the outcome as based on an expected usage. The presentation sequence of the tips within strip 76 could have some statistical variation. Anyway, the repeated presentation of a particular tip will generally be in disfavour.

## Claims

1. A method for operating an information processing system whilst dynamically presenting help items to a user person who uses the system, **characterised by** staticizing occurrences of various user-initiated enterings into the system that each are associated to a respective one of such Help Items, and subsequently, under control of predetermined system conditions and then-current results of said staticizing, outputting selected tips as pertaining to little-used one amongst various categories of said enterings.

2. A method as claimed in Claim 1, **characterised by** executing said outputting in speech.

3. A method as claimed in Claim 1, **characterised by** the use thereof in a vehicle information system.

4. A methods as claimed in Claim 1, **characterised by** said tips representing user interface directed shortcuts.

5. A method as claimed in Claim 1, **characterised in that**one or more prevailing system states will permanently block the outputting of one or more selected Help Items.

6. A system being arranged for implementing a method as claimed in Claim 1 for operating an information processing system whilst dynamically presenting Help Items to a user person on a user output facility, **characterised by** having staticizing means for staticizing occurrences of various user-initiated enterings into the system that each pertain to a respective one of such Help Items, and selection means for subsequently, under control of predetermined system conditions and then-current results of said staticizing, selecting and outputting selected tips as pertaining to little-used categories amongst various categories of said enterings.

7. A system as claimed in Claim 6, **characterised by** having speech output means for executing said outputting in speech.

8. A system as claimed in Claim 6, **characterised in that**
